# EUROPEAN PATENT SPECIFICATION

(11) **EP 3 558 884 B1**
(45) Date of publication and mention of the grant of the patent: **17.02.2021**
(21) Application number: 17832431.5
(22) Date of filing: 19.12.2017
(51) Int. Cl.: C03C 17/00, C03C 17/32, C09D 5/00, C09D 5/44, C09D 133/02, C09D 183/02, C09D 183/04, C08G 77/02, G02B 1/10, G02B 1/11

(54) **ANTI-REFLECTIVE COATED ARTICLES AND METHOD OF MAKING THEM**
ARTIKEL MIT ANTIREFLEXIONSBESCHICHTUNG UND VERFAHREN ZU DEREN HERSTELLUNG
ARTICLES AVEC REVÊTEMENT ANTI-REFLET ET LEURS PROCÉDÉS DE FABRICATION

(30) Priority: 20.12.2016 US 201615384633
(43) Date of publication of application: 30.10.2019
(73) Proprietor: PPG Industries Ohio, Inc., Cleveland, OH 44111 (US)
(72) Inventor: LU, Songwei, Wexford Pennsylvania 15090 (US); SHAO, Jiping, Sewickley Pennsylvania 15143 (US); BASIL, John D., Pittsburgh Pennsylvania 15215 (US); SAHA, Gobinda, Pittsburgh Pennsylvania 15239 (US); SCHWENDEMAN, Irina G., Wexford Pennsylvania 15090 (US)
(74) Representative: f & e patent
(86) International application number: PCT/US2017/067355
(87) International publication number: WO 2018/118949

(56) References cited:
- EP-A1- 0 402 473
- EP-A2- 0 782 015
- JP-A- 2003 292 896
- JP-A- 2008 201 922

## Description

### FIELD OF THE INVENTION

The present invention relates to coated articles, including touch screen displays, which comprise substrates coated with an anti-reflective coating.

### BACKGROUND OF THE INVENTION

Information displays such as touch screen displays appear more and more frequently on interactive electronic devices. Reducing reflection of the screens caused by incident light is desired to maximize visibility of the displays in different lighting environments. There are various known methods of reducing the reflection of transparent substrate surfaces. An exemplary method involves depositing a light interference coating stack on the substrate that reduces reflection by exploiting the optical interference within adjacent thin films. Such films usually have a thickness of about one-quarter or one-half the nominal wavelength of visible light, depending on the relative indices of refraction of the coatings and substrate. Another method includes forming a light scattering means at the surface of the substrate, such as by mechanically or chemically altering the outermost surface of the substrate or through use of a diffuser coating or a glare reducing film on the glass substrate.

Interference coatings reduce reflection and glare without reducing resolution. However, they are relatively expensive to deposit, requiring the use of vacuum deposition techniques such as sputtering and precise manufacturing conditions, or very precise alkoxide solution dip coating techniques, with subsequent drying and firing steps. Strict processing parameters must be observed to obtain the desired results. While vacuum deposition of anti-reflective coatings allows for very precise control of film thickness and acceptable mechanical properties, it requires the use of a very expensive vacuum chamber and a batch type process. Batch processes often limit productivity.

Conventional anti-reflective coatings, such as moth eye coatings, tend to be porous and often demonstrate poor mechanical performance because of their porosity, despite excellent anti-reflective properties.

For touch screens such as those used on smart phones and tablets, a durable, anti-smudge coating is desired to ensure the cleanness of the touch screen surface. The anti-smudge coating is also expected to have a very smooth, silky, and slippery feel. Various super-hydrophobic coatings have demonstrated different degrees of anti-smudge properties and slipperiness. However, it is very difficult to achieve a better wear durability as tested using #0000 steel wool after more than 6000 cycles, and a coefficient of friction (COF) of ≤0.03. Document JP-A-2003 292896 describes a coating film ("hard-coating") having an anti-reflection film coated on the surface of the "hard-coating" film. The "hard coating" comprises metal oxides, silane compounds having at least one polymerization group and an epoxy(meth)acrylate having a glycidyl group and an acryloyl group at the same time. The "hard coating" may further comprise (d) silica sol or silica fine particles and may further comprise tetra functional silane of the general formula of Si(OR₁)₄ such as tetranetgixysilane. The anti-reflection film can be applied by vapor deposition of metal oxides on the surface of the "hard coating". Document EP 0 782 015 A2 describes non-fogging antireflection films. The composition for forming the non-fogging antireflection film comprises a composition obtainable by polycondensation of a hydrolyzate of an inorganic alkoxide conducted at least in the presence of a polyacrylic acid compound, wherein the presence of polyalkylene oxide is excluded. In a preferred embodiment the inorganic alkoxide is at least one of the compounds represented by Formula (I) and Formula (II): M(OR)ₐ M(OR)ₙ(X)ₐ₋ₙ, where M is an atom selected from the group consisting of Si, Al, Ti, Zr, Ca, Fe, V, Sn, Li, Be, B and P; R is an alkyl group; X is an alkyl group, a functional group-substituted alkyl group, or a halogen; a is a valence of M; and n is an integer of from 1 to a. Document JP-A-2008 201922 describes coating compositions that are used to form an intermediate layer between a substrate and a metal oxide containing anti-reflection layer. Said anti-reflection layer is deposited by vapor deposition of a metal oxide. Document EP-A-0 402 473 relates to a glass or plastic article having a reflection-preventive coating, a process for the preparation thereof, and a reflection-preventive coating composition. A reflection-preventive coating composition according to EP-A-0 402 473 comprises 1 part by weight of MgF₂ having an average particle diameter not larger than 500 angstroms, 0.5 to 1.5 parts by weight of a tetraalkoxysilane, 0.1 to 1.0 part by weight of water, and 30 to 50 parts by weight of a monohydric alcohol having 1 to 4 carbon atoms, wherein the pH value of the composition is adjusted to 1 to 4.

It would be desirable to provide an alternative anti-reflective coating on a substrate while avoiding the drawbacks of the prior art, and to provide touch screen displays and other optical articles that demonstrate superior properties with inexpensive production costs.

### SUMMARY OF THE INVENTION

Coated articles demonstrating anti-reflective properties are provided. An exemplary coated article comprises a substrate and an anti-reflective coating layer applied to at least one surface of the substrate; the coating is deposited from an acidic sol-gel composition comprising a silane. The coated article may further comprise an anti-fouling coating layer applied on top of the anti-reflective coating layer.

### BRIEF DESCRIPTION OF THE DRAWING

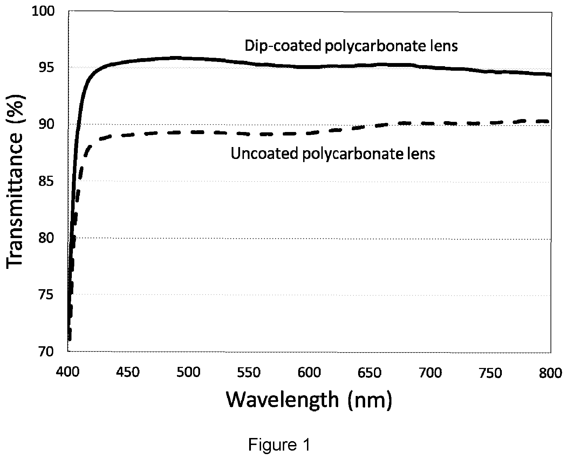

Figure 1 illustrates the transmittance spectra of an anti-reflective coating applied to a polycarbonate lens in comparison with an uncoated polycarbonate lens over a wavelength range of 400 to 800 nm, measured using a Perkin Elmer Lambda 1050 spectrophotometer.

### DETAILED DESCRIPTION OF THE INVENTION

Other than in any operating examples, or where otherwise indicated, all numbers expressing quantities of ingredients, reaction conditions and so forth used in the specification and claims are to be understood as being modified in all instances by the term "about." Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contain certain errors necessarily resulting from the standard deviation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

As used in this specification and the appended claims, the articles "a," "an," and "the" include plural referents unless expressly and unequivocally limited to one referent.

The various aspects and examples of the present invention as presented herein are each understood to be non-limiting with respect to the scope of the invention.

The coated articles of the present invention comprise an anti-reflective layer coated on a substrate, and are often suitable as optical articles. Substrates suitable for use in the coated articles (such as touch screen displays) of the present invention can include glass or any of the plastic optical substrates known in the art. The term "optical substrate" means that the specified substrate exhibits a light transmission value (transmits incident light) of at least 4 percent, such as at least 50 percent, or at least 70 percent, or at least 85 percent; and exhibits a haze value of less than 5 percent, e.g., less than 1 percent or less than 0.5 percent, when the haze value is measured by, for example, a Haze Gard Plus Instrument. Optical substrates include, but are not limited to, optical articles such as lenses, windows, mirrors, active or passive liquid crystal cell elements or devices, and display elements such as screens, including touch screens, on devices including cell phones, tablets, GPS, voting machines, POS (Point-Of-Sale), televisions or computer screens; display sheets in a picture frame; monitors, wearable displays, or security elements. Optical substrates also include optical layers, e.g., optical resin layers, optical films and optical coatings, and optical substrates having a light influencing property. Optical articles of the present invention may additionally include optical lenses and ophthalmic lenses such as plano (without optical power) and vision correcting (prescription) lenses (finished and semi-finished) including multifocal lenses (bifocal, trifocal, and progressive lenses); and ocular devices such as contact lenses and intraocular lenses, sun lenses, fashion lenses, sport masks, face shields and goggles. The optical articles may also comprise glazings such as windows and vehicular transparencies such as automobile windshields and side windows. Other coated articles of the present invention include solar cells.

Substrates suitable for use in the coated articles of the present invention can include photovoltaic glass substrates known in the art. Photovoltaic glass substrates include all photovoltaic modules with glass on the top surface.

The term "transparent", as used for example in connection with a substrate, film, material and/or coating, means that the indicated substrate, coating, film and/or material has the property of transmitting light without appreciable scattering so that objects lying beyond are entirely visible.

The substrates typically have at least one smooth surface, and often have two opposing surfaces. Each surface may independently be flat, convex, concave, or combinations thereof in any desired shape. Flat opposing surfaces may or may not be parallel to each other. Either one or both surfaces may be coated with the anti-reflective coating. Suitable glass substrates include soda-lime-silica glass, such as soda-lime-silica slide glass sold from Fisher, or aluminosilicate glass such as Gorilla® glass from Corning Incorporated, or Dragontrail® glass from Asahi Glass Co., Ltd. In particular aspects of the present invention, the substrate is transparent and has at least one smooth surface, which may also be flat. Suitable examples of plastic substrates include polyol(allyl carbonate) monomers, e.g., allyl diglycol carbonates such as diethylene glycol bis(allyl carbonate), which monomer is sold under the trademark CR-39 by PPG; polyurea-polyurethane (polyurea urethane) polymers, which are prepared, for example, by the reaction of a polyurethane prepolymer and a diamine curing agent, a composition for one such polymer being sold under the trademark TRIVEX® by PPG; polyol(meth)acryloyl terminated carbonate monomer; diethylene glycol dimethacrylate monomers; ethoxylated phenol methacrylate monomers; diisopropenyl benzene monomers; ethoxylated trimethylol propane triacrylate monomers; ethylene glycol bismethacrylate monomers; poly(ethylene glycol) bismethacrylate monomers; urethane acrylate monomers; poly(ethoxylated Bisphenol A dimethacrylate); poly(vinyl acetate); poly(vinyl alcohol); poly(vinyl chloride); poly(vinylidene chloride); polyethylene; polypropylene; polyurethanes; polythiourethanes; thermoplastic polycarbonates, such as the carbonate-linked resin derived from Bisphenol A and phosgene, one such material being sold under the trademark LEXAN; polyesters, such as the material sold under the trademark MYLAR; poly(ethylene terephthalate); polyvinyl butyral; poly(methyl methacrylate), such as the material sold under the trademark PLEXIGLAS, and polymers prepared by reacting polyfunctional isocyanates with polythiols or polyepisulfide monomers, either homopolymerized or co-and/or terpolymerized with polythiols, polyisocyanates, polyisothiocyanates and optionally ethylenically unsaturated monomers or halogenated aromatic-containing vinyl monomers. Also suitable are copolymers of such monomers and blends of the described polymers and copolymers with other polymers, e.g., to form interpenetrating network products.

Prior to application of the anti-reflective coating layer, the surface of the substrate may be cleaned and/or otherwise pretreated as known in the art to prepare the surface for coating. For example, the substrate surface may be plasma treated in order to enhance adhesion of the coating layer to the substrate surface.

Plasma treatment, also called corona discharge treatment, is a known clean and efficient way to alter the physical surface, e.g., by roughening and/or chemically altering the surface without affecting the rest of the substrate. Either inert gases, such as argon, or reactive gases, such as oxygen, may be used as the plasma gas. Inert gases generally "roughen" the surface of substrates, while reactive gases such as oxygen may both roughen and chemically alter the surface exposed to the plasma, e.g., by producing hydroxyl or carboxyl units on the surface. Although not limiting herein, it is considered that oxygen may provide a slight, but effective, physical roughening of the surface of the lens along with a slight, but effective, chemical modification of the surface of the lens to improve adhesion without detrimentally effecting the optical (or other significant) properties of the final article. Atmospheric air can also be used as the plasma gas and would be classified as a reactive gas, which process is known as atmospheric plasma. As will be appreciated by those skilled in the art, the extent of the surface roughening and/or chemical modification will be a function of the plasma gas and the operating conditions of the plasma chamber in which it is applied. Plasma treatment can also be effective to remove foreign contaminants present on the surface of a substrate, making it more suitable for further processing.

The coating layer typically demonstrates a refractive index in a range of 1.40 to 1.48, which may be measured at ambient temperature using an F20-UV Thin Film Analyzer from Filmetrics, Inc. San Diego, California. Ambient temperature typically ranges from 60 to 90 °F (15.6 to 32.2 °C), such as a typical room temperature, 72°F (22.2°C).

The anti-reflective coating layer may be formed from an acidic sol-gel, i. e., solution-gelation, composition. The sol-gel composition forms a glossy finish (high gloss), anti-reflective coating on the substrate. The sol-gel composition comprises (a) a tetraalkoxysilane. Sol-gels are dynamic systems wherein a solution ("sol") gradually evolves into a gel-like two-phase system containing both a liquid phase and solid phase, whose morphologies range from discrete particles to continuous polymer networks within the continuous liquid phase. Because of the sol-gel nature of the composition, the alkoxysilanes are hydrolyzed and they are partially condensed prior to curing of the layer. The hydrolyzed tetraalkoxysilane in the sol-gel layer typically comprises tetramethoxysilane and/or tetraethoxysilane. The tetraalkoxysilane is typically present in the acidic sol-gel composition in an amount of at least 0.1 percent by weight and less than 20.0 percent by weight, often less than 10.0 percent by weight, more often less than 5.0 percent by weight, based on the total weight of the acidic sol-gel composition.

The acidic sol-gel composition further comprises (b) an alkyl trialkoxysilane. Examples include methyltrimethoxysilane, and methyltriethoxysilane. The alkyl trialkoxysilane is typically present in the acidic sol-gel composition in an amount of at least 0.1 percent by weight and less than 9.0 percent by weight, often less than 4.0 percent by weight, based on the total weight of the acidic sol-gel composition.

The acidic sol-gel composition further comprises (c) a silane-functional acrylic polymer. Examples include those described in U.S. Patent No. 8,148,487 B2 and 8,507,631 B2, which are incorporated herein by reference in their entireties. By "polymer" is meant a polymer including homopolymers and copolymers, and oligomers. By "silane-functional acrylic polymer" is meant an acrylic polymer bonded (such as by addition polymerization) to a silane having at least one and up to three hydrolyzable groups. Other examples include a reaction product of hydroxypropyl acrylate and methacryloxypropyltrimethoxy silane. The silane-functional acrylic polymer is typically present in the acidic sol-gel composition in an amount of 0.05 to 7.50 percent by weight, based on the total weight of the acidic sol-gel composition.

The acidic sol-gel composition further comprises (d) inorganic oxide particles. The particles can comprise a single inorganic oxide such as silica in colloidal, fumed, crystalline or amorphous form, alumina or colloidal alumina, titanium dioxide, cesium oxide, yttrium oxide, colloidal yttria, zirconia, e.g., colloidal or amorphous zirconia, zinc oxide, and mixtures of any of the foregoing; or an inorganic oxide of one type upon which is deposited an inorganic oxide of another type.

The particles are typically present in the acidic sol-gel composition in an amount of 0.1 to 4.0 percent by weight, based on the total weight of the acidic sol-gel composition.

The acidic sol-gel composition further comprises (e) a mineral acid. Suitable mineral acids include sulfuric acid, nitric acid, hydrochloric acid, and the like. Nitric acid is most often used. The mineral acid is typically present in an amount such that the weight ratio of mineral acid to silane is greater than 0.02, often greater than 0.05, more often greater than 0.08, most often greater than 0.1.

The acidic sol-gel composition additionally comprises (f) water and (g) a solvent such as a glycol ether or alcohol. Suitable alcohols include ethanol, n-propanol, iso-propanol, n-butanol, isobutanol, and the like, including mixtures thereof. Examples of glycol ethers include propylene glycol methyl ether, propylene glycol methyl ether acetate, dipropylene glycol monomethyl ether, and/or diethylene glycol monobutyl ether. Note that the phrase "and/or" when used in a list is meant to encompass alternative embodiments including each individual component in the list as well as any combination of components. For example, the list "A, B, and/or C" is meant to encompass seven separate embodiments that include A, or B, or C, or A + B, or A + C, or B + C, or A + B + C.

The water (f) is typically present in the acidic sol-gel composition in an amount of 0.1 to 10.0 percent by weight, based on the total weight of the acidic sol-gel composition, and the solvent is typically present in the acidic sol-gel composition in an amount of 60.0 to 98.0 percent by weight, based on the total weight of the acidic sol-gel composition. This allows for a total solids content of at least 0.1 percent by weight, or at least 0.8 percent by weight, or at least 1.5 percent by weight; and a total solids content of at most 20.0 percent by weight, or at most 10.0 percent by weight, or at most 8.0 percent by weight. For example, the curable film-forming composition typically has a solids content of 0.1 to 20 percent by weight, often 0.5 to 10 percent by weight, more often 0.8 to 8.0 percent by weight, usually less than 6.0 percent by weight or less than 5.0 percent by weight, based on the total weight of the acidic sol-gel composition.

The acidic sol-gel composition may additionally comprise MgF₂. When used, it is present in the acidic sol-gel composition in an amount of at least 0.1 percent by weight, and at most 15 percent by weight, or at most 10 percent by weight, or at most 5 percent by weight, based on the total weight of the acidic sol-gel composition. On a solids basis, the MgF₂ is usually present in the acidic sol-gel composition in an amount of at least 0.1 percent by weight, and at most 50 percent by weight, based on the total weight of solids in the acidic sol-gel composition.

The acidic sol-gel compositions can include a variety of optional ingredients and/or additives that are somewhat dependent on the particular application of the final coated article. For example, the composition may contain an additive that exhibits a light influencing property such as photochromism. Other optional ingredients include rheology control agents, surfactants, initiators, catalysts such as aluminum acetylacetonate, wetting agents such as BYK-306 (available from Palmer Holland), curing agents, cure-inhibiting agents, reducing agents, acids, bases, preservatives, free radical donors, free radical scavengers and thermal stabilizers, which adjuvant materials are known to those skilled in the art.

The acidic sol-gel compositions may include a colorant, although typically the compositions are colorless and transparent. They are also usually optically clear, having a light transmission of at least 70% and demonstrating a haze value less than 65% depending on gloss level.

As used herein, the term "colorant" means any substance that imparts color and/or other opacity and/or other visual effect to the composition. The colorant can be added to the coating in any suitable form, such as discrete particles, dispersions, solutions and/or flakes. A single colorant or a mixture of two or more colorants can be used in the coatings of the present invention.

Example colorants include pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant can be organic or inorganic and can be agglomerated or non-agglomerated. Colorants can be incorporated into the coatings by grinding or simple mixing. Colorants can be incorporated by grinding into the coating by use of a grind vehicle, such as an acrylic grind vehicle, the use of which will be familiar to one skilled in the art.

Example pigments and/or pigment compositions include, but are not limited to, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), titanium dioxide, carbon black and mixtures thereof. The terms "pigment" and "colored filler" can be used interchangeably.

Example dyes include, but are not limited to, those that are solvent and/or aqueous based such as acid dyes, azoic dyes, basic dyes, direct dyes, disperse dyes, reactive dyes, solvent dyes, sulfur dyes, mordant dyes, for example, bismuth vanadate, anthraquinone, perylene, aluminum, quinacridone, thiazole, thiazine, azo, indigoid, nitro, nitroso, oxazine, phthalocyanine, quinoline, stilbene, and triphenyl methane.

Example tints include, but are not limited to, pigments dispersed in water-based or water miscible carriers such as AQUA-CHEM 896 commercially available from Degussa, Inc., CHARISMA COLORANTS and MAXITONER INDUSTRIAL COLORANTS commercially available from Accurate Dispersions division of Eastman Chemical, Inc.

As noted above, the colorant can be in the form of a dispersion including, but not limited to, a nanoparticle dispersion. Nanoparticle dispersions can include one or more highly dispersed nanoparticle colorants and/or colorant particles that produce a desired visible color and/or opacity and/or visual effect. Nanoparticle dispersions can include colorants such as pigments or dyes having a particle size of less than 150 nm, such as less than 70 nm, or less than 30 nm. Nanoparticles can be produced by milling stock organic or inorganic pigments with grinding media having a particle size of less than 0.5 mm. Example nanoparticle dispersions and methods for making them are identified in U.S. Patent No. 6,875,800 B2. Nanoparticle dispersions can also be produced by crystallization, precipitation, gas phase condensation, and chemical attrition (i.e., partial dissolution). In order to minimize re-agglomeration of nanoparticles within the coating, a dispersion of resin-coated nanoparticles can be used. As used herein, a "dispersion of resin-coated nanoparticles" refers to a continuous phase in which is dispersed discreet "composite microparticles" that comprise a nanoparticle and a resin coating on the nanoparticle.

Example special effect compositions that may be used in the coating of the present invention include pigments and/or compositions that produce one or more appearance effects such as reflectance, pearlescence, metallic sheen, phosphorescence, fluorescence, photochromism, photosensitivity, thermochromism, goniochromism and/or color-change. Additional special effect compositions can provide other perceptible properties, such as reflectivity, opacity or texture. In a non-limiting embodiment, special effect compositions can produce a color shift, such that the color of the coating changes when the coating is viewed at different angles. Example color effect compositions are identified in U.S. Patent No. 6,894,086. Additional color effect compositions can include transparent coated mica and/or synthetic mica, coated silica, coated alumina, a transparent liquid crystal pigment, a liquid crystal coating, and/or any composition wherein interference results from a refractive index differential within the material and not because of the refractive index differential between the surface of the material and the air.

In certain non-limiting examples, a photosensitive composition and/or photochromic composition, which reversibly alters its color when exposed to one or more light sources, can be used in the coating of the present invention. Photochromic and/or photosensitive compositions can be activated by exposure to radiation of a specified wavelength. When the composition becomes excited, the molecular structure is changed and the altered structure exhibits a new color that is different from the original color of the composition. When the exposure to radiation is removed, the photochromic and/or photosensitive composition can return to a state of rest, in which the original color of the composition returns. In one non-limiting example, the photochromic and/or photosensitive composition can be colorless in a non-excited state and exhibit a color in an excited state. Full color-change can appear within milliseconds to several minutes, such as from 20 seconds to 60 seconds. Example photochromic and/or photosensitive compositions include photochromic dyes.

The photosensitive composition and/or photochromic composition can be associated with and/or at least partially bound to, such as by covalent bonding, a polymer and/or polymeric materials of a polymerizable component. In contrast to some coatings in which the photosensitive composition may migrate out of the coating and crystallize into the substrate, the photosensitive composition and/or photochromic composition associated with and/or at least partially bound to a polymer and/or polymerizable component in accordance with a non-limiting embodiment of the present invention, have minimal migration out of the coating. Example photosensitive compositions and/or photochromic compositions and methods for making them are identified in U.S. Application Serial No. 10/892,919 filed July 16, 2004 and incorporated herein by reference.

In general, the colorant can be present in the coating composition in any amount sufficient to impart the desired property, visual and/or color effect. The colorant may comprise from 1 to 65 weight percent of the present compositions, such as from 3 to 40 weight percent or 5 to 35 weight percent, with weight percent based on the total weight of the compositions.

The coated articles of the present invention may further comprise an anti-fouling coating layer applied to at least one surface of the anti-reflective coating layer. Anti-fouling coatings may include, for example, any coatings known in the art that demonstrate anti-smudge, anti-fingerprint, anti-grease, dirt repellant, and/or water repellant properties. If the anti-reflective coating layer is applied to two opposing surfaces of the substrate, the anti-fouling layer may be applied to either one or both of the coated surfaces.

Coated articles of the present invention typically demonstrate a single-side integrated specular-only reflectance less than 3.20%, such as less than 3.00%, or less than 2.80%, between the wavelengths of 380 nm and 780 nm, as measured by a Perkin Elmer Lambda 1050 spectrophotometer using a 3M black electrical tape on the back side of glass to eliminate the backside reflection. In a particular example of the present invention, when the substrate comprises glass and the anti-reflective coating layer is applied to one surface of the substrate, the coated articles typically demonstrate a single-side integrated specular-only reflectance less than 2.80% in a wavelength range from 380 nm to 780 nm.

Coated articles of the present invention demonstrate reduced reflection without reducing resolution of a display viewed through the article. This is particularly advantageous when the coated article is an optical article such as a screen, in particular, a touch screen, for an electronic device such as a phone, monitor, tablet, or the like.

In another example of the present invention, the substrate comprises polymethylmethacrylate and the solvent (g) comprises n-propanol, present in an amount higher than 60 percent by weight, based on the total weight of the acidic sol-gel composition. It has been found the use of n-propanol in the acidic sol-gel composition in such amounts helps to minimize haze on polymethylmethacrylate substrates.

Coated articles of the present invention may also comprise solar cells. The anti-reflective coating layer reduces reflection, allowing for increased efficacy of the power output of the solar cell.

The applied anti-reflective coating layer typically has a dry film thickness of less than 5 microns, often less than 3 microns, or less than 1 micron, such as less than 200 nm. In a particular example of the coated articles of the present invention, the substrate (A) comprises polymethylmethacrylate having two opposing surfaces and the anti-reflective coating layer (B) is applied to both opposing surfaces of the substrate.

The present invention is further drawn to a method of forming a coated article having an anti-reflective surface. Any of the coated articles described above may be prepared by this method. The method comprises (1) applying any of the anti-reflective coating layers described above to a surface of any of the substrates described above to form a coated substrate; and (2) subjecting the coated substrate to conditions for a time sufficient to effect cure of the anti-reflective coating.

The acidic sol-gel composition that forms the anti-reflective coating layer may be applied to the substrate by one or more of a number of methods such as spraying, dipping (immersion), spin coating, slot die coating, or flow coating onto a surface thereof. Spraying is used most often, such as ultrasonic spray application, precision spray application, and air atomized spray application. Slot die coating processes may produce coatings with a precisely controlled thickness. The coating composition may be kept at ambient temperature immediately prior to application.

At least a portion of at least one surface of the substrate is coated; if the substrate has two opposing surfaces, either one or both surfaces may be coated. By "at least a portion" of an item is meant a fraction greater than zero, up to and including the entirety thereof.

After application of the sol-gel layer, the coated substrate is then subjected to conditions for a time sufficient to effect cure of the sol-gel layer and form an anti-reflective coated article. The term "cure", "cured" or similar terms, as used in connection with a cured or curable composition, e.g., a "cured composition" of some specific description, means that at least a portion of any polymerizable and/or crosslinkable components that form the curable composition is polymerized and/or crosslinked. Additionally, curing of a composition refers to subjecting said composition to curing conditions such as those listed below, leading to the reaction of the reactive functional groups of the composition. The term "at least partially cured" means subjecting the composition to curing conditions, wherein reaction of at least a portion of the reactive groups of the composition occurs. The composition can also be subjected to curing conditions such that a substantially complete cure is attained and wherein further curing results in no significant further improvement in physical properties, such as hardness. For example, the coated substrate may be heated to a temperature of at least 80°C, such as 120°C for at least 0.5 hours, to promote the continued polymerization of the composition. In particular examples, the coated substrate may be heated to a temperature of at least 80°C for at least 30 minutes, or at least 120°C for at least 3 hours, or the coated substrate may be heated to a temperature of at least 150°C for at least 1 hour.

In the method of the present invention, an anti-fouling coating layer as described above may be applied to at least a portion of at least one surface of the anti-reflective coating layer, either before or after the curing step (2). The anti-fouling coating layer may be applied using any of those methods disclosed above.

In a particular example of the method of the present invention, the substrate comprises glass, polymethylmethacrylate, or polycarbonate, and the anti-reflective coating layer is applied by spin coating or spray coating and has a dry film thickness of 80 to 120 nm. In this example, the coated article usually comprises an optical article selected from a display screen, a touch screen, a solar cell, and a glazing. In another example of the method of the present invention, such as in the preparation of an optical lens, the substrate may comprise polycarbonate or allyl diglycol carbonate, and the anti-reflective coating layer is applied by dip-coating and has a dry film thickness of 80 to 120 nm.

The following examples are intended to illustrate various aspects of the invention, and should not be construed as limiting the invention in any way.

### EXAMPLES

### Example 1

In a clean container, 7.5 parts of tetraethyl orthosilicate (98% purity, Sigma-Aldrich Corporation) was mixed with 1.5 parts of a silane functional acrylic polymer¹, 2.25 parts of colloidal silica MT-ST (Nissan Chemical), and 3.6 parts of methyltrimethoxysilane (available from Evonik). After mixing for 30 minutes, a mixture of 6.8 parts of n-propanol (99.5% purity, Sigma-Aldrich Corporation), 2.75 parts of deionized water, and 2.5 parts of an aqueous solution of HNO₃ (4.68 percent by weight nitric acid in water) was added to the first mixture to hydrolyze silanes. After 30 minutes hydrolysis, 0.25 parts of aluminum acetylacetonate (99% purity, Sigma-Aldrich Corporation) and 0.1 part of BYK-306 (BYK USA Inc.) was added to the mixture. Finally, an amount of 72.75 parts of n-propanol was added to dilute the solution while mixing.

### Example 2

In a clean container, 7.5 parts of tetraethyl orthosilicate (98% purity, Sigma-Aldrich Corporation) was mixed with 2.25 parts of a silane functional acrylic polymer¹, 2.25 parts of colloidal silica MT-ST (Nissan Chemical), and 3.6 parts of methyltrimethoxysilane (Evonik). After mixing for 30 minutes, a mixture of 6.8 parts of n-propanol (99.5% purity, Sigma-Aldrich Corporation), 2.75 parts of deionized water, and 2.5 parts of an aqueous solution of HNO₃ (4.68 percent by weight nitric acid in water) was added to the first mixture to hydrolyze silanes. After 30 minutes hydrolysis, 0.25 parts of aluminum acetylacetonate (99% purity, Sigma-Aldrich Corporation) and 0.1 part of BYK-306 (BYK USA Inc.) was added to the mixture. Finally, an amount of 72 parts of n-propanol was added to dilute the solution while mixing.

### Example 3

In a clean container, 7.5 parts of tetraethyl orthosilicate (98% purity, Sigma-Aldrich Corporation) was mixed with 3.0 parts of a silane functional acrylic polymer¹, 2.25 parts of colloidal silica MT-ST (Nissan Chemical), and 3.6 parts of methyltrimethoxysilane (Evonik). After mixing for 30 minutes, a mixture of 6.8 parts of n-propanol (99.5% purity, Sigma-Aldrich Corporation), 2.75 parts of deionized water, and 2.5 parts of an aqueous solution of HNO₃ (4.68 percent by weight nitric acid in water) was added to the first mixture to hydrolyze silanes. After 30 minutes hydrolysis, 0.25 parts of aluminum acetylacetonate (99% purity, Sigma-Aldrich Corporation) and 0.1 part of BYK-306 (BYK USA Inc.) was added to the mixture. Finally, an amount of 71.25 parts of n-propanol was added to dilute the solution while mixing.

### Example 4

In a clean container, 7.5 parts of tetraethyl orthosilicate (98% purity, Sigma-Aldrich Corporation) was mixed with 3.75 parts of a silane functional acrylic polymer¹, 2.25 parts of colloidal silica MT-ST (Nissan Chemical), and 3.6 parts of methyltrimethoxysilane (Evonik). After mixing for 30 minutes, a mixture of 6.8 parts of n-propanol (99.5% purity, Sigma-Aldrich Corporation), 2.75 parts of deionized water, and 2.5 parts of an aqueous solution of HNO₃ (4.68 percent by weight nitric acid in water) was added to the first mixture to hydrolyze silanes. After 30 minutes hydrolysis, 0.25 parts of aluminum acetylacetonate (99% purity, Sigma-Aldrich Corporation) and 0.1 part of BYK-306 (BYK USA Inc.) was added to the mixture. Finally, an amount of 70.5 parts of n-propanol was added to dilute the solution while mixing.

### Example 5

In a clean container, 7.5 parts of tetraethyl orthosilicate (98% purity, Sigma-Aldrich Corporation) was mixed with 3.75 parts of a silane functional acrylic polymer¹, 2.25 parts of colloidal silica MT-ST (Nissan Chemical), and 3.6 parts of methyltrimethoxysilane (Evonik). After mixing for 30 minutes, a mixture of 6.8 parts of n-propanol (99.5% purity, Sigma-Aldrich Corporation), 2.75 parts of deionized water, and 2.5 parts of an aqueous solution of HNO₃ (4.68 percent by weight nitric acid in water) was added to the first mixture to hydrolyze silanes. After 30 minutes hydrolysis, 0.1 part of BYK-306 (BYK USA Inc.) was added to the mixture. Finally, an amount of 70.75 parts of n-propanol was added to dilute the solution while mixing.

### Example 6

In a clean container, 15.0 parts of tetraethyl orthosilicate (98% purity, Sigma-Aldrich Corporation) was mixed with 0.75 parts of a silane functional acrylic polymer¹, 2.25 parts of colloidal silica MT-ST (Nissan Chemical), and 3.6 parts of methyltrimethoxysilane (Evonik). After mixing for 30 minutes, a mixture of 6.8 parts of n-propanol (99.5% purity, Sigma-Aldrich Corporation), 2.75 parts of deionized water, and 2.5 parts of an aqueous solution of HNO₃ (4.68 percent by weight nitric acid in water) was added to the first mixture to hydrolyze silanes. After 30 minutes hydrolysis, 0.25 parts of aluminum acetylacetonate (99% purity, Sigma-Aldrich Corporation) and 0.1 part of BYK-306 (BYK USA Inc.) was added to the mixture. Finally, an amount of 66.0 part of n-propanol was added to dilute the solution while mixing.

### Example 7

In a clean container, 12.5 parts of tetraethyl orthosilicate (98% purity, Sigma-Aldrich Corporation) was mixed with 0.75 parts of a silane functional acrylic polymer¹, 2.25 parts of colloidal silica MT-ST (Nissan Chemical), and 3.6 parts of methyltrimethoxysilane (Evonik). After mixing for 30 minutes, a mixture of 6.8 parts of n-propanol (99.5% purity, Sigma-Aldrich Corporation), 2.75 parts of deionized water, and 2.5 parts of an aqueous solution of HNO₃ (4.68 percent by weight nitric acid in water) was added to the first mixture to hydrolyze silanes. After 30 minutes hydrolysis, 0.25 parts of aluminum acetylacetonate (99% purity, Sigma-Aldrich Corporation) and 0.1 part of BYK-306 (BYK USA Inc.) was added to the mixture. Finally, an amount of 68.5 parts of n-propanol was added to dilute the solution while mixing.

### Example 8

In a clean container, 10.0 parts of tetraethyl orthosilicate (98% purity, Sigma-Aldrich Corporation) was mixed with 0.75 parts of a silane functional acrylic polymer¹, 2.25 parts of colloidal silica MT-ST (Nissan Chemical), and 3.6 parts of methyltrimethoxysilane (Evonik). After mixing for 30 minutes, a mixture of 6.8 parts of n-propanol (99.5% purity, Sigma-Aldrich Corporation), 2.75 parts of deionized water, and 2.5 parts of an aqueous solution of HNO₃ (4.68 percent by weight nitric acid in water) was added to the first mixture to hydrolyze silanes. After 30 minutes hydrolysis, 0.25 parts of aluminum acetylacetonate (99% purity, Sigma-Aldrich Corporation) and 0.1 part of BYK-306 (BYK USA Inc.) was added to the mixture. Finally, an amount of 71.0 parts of n-propanol was added to dilute the solution while mixing.

### Example 9

In a clean container, 7.5 parts of tetraethyl orthosilicate (98% purity, Sigma-Aldrich Corporation) was mixed with 0.75 parts of a silane functional acrylic polymer¹, 2.25 parts of colloidal silica MT-ST (Nissan Chemical), and 3.6 parts of methyltrimethoxysilane (Evonik). After mixing for 30 minutes, a mixture of 6.8 parts of n-propanol (99.5% purity, Sigma-Aldrich Corporation), 2.75 parts of deionized water, and 2.5 parts of an aqueous solution of HNO₃ (4.68 percent by weight nitric acid in water) was added to the first mixture to hydrolyze silanes. After 30 minutes hydrolysis, 0.25 parts of aluminum acetylacetonate (99% purity, Sigma-Aldrich Corporation) and 0.1 part of BYK-306 (BYK USA Inc.) was added to the mixture. Finally, an amount of 73.5 parts of n-propanol was added to dilute the solution while mixing.

### Example 10

In a clean container, 7.5 parts of tetraethyl orthosilicate (98% purity, Sigma-Aldrich Corporation) was mixed with 0.75 parts of a silane functional acrylic polymer¹, 2.25 parts of colloidal silica MT-ST (Nissan Chemical), and 3.6 parts of methyltrimethoxysilane (Evonik). After mixing for 30 minutes, a mixture of 6.8 parts of n-propanol (99.5% purity, Sigma-Aldrich Corporation), 2.75 parts of deionized water, and 2.5 parts of an aqueous solution of HNO₃ (4.68 percent by weight nitric acid in water) was added to the first mixture to hydrolyze silanes. After 30 minutes hydrolysis, 0.1 part of BYK-306 (BYK USA Inc.) was added to the mixture. Finally, an amount of 73.75 parts of n-propanol was added to dilute the solution while mixing.

### Example 11

In a clean container, 11.5 parts of tetraethyl orthosilicate (98% purity, Sigma-Aldrich Corporation) is mixed with 0.75 parts of a silane functional acrylic polymer¹, 1.72 parts of colloidal silica MT-ST (Nissan Chemical), and 2.8 parts of methyltrimethoxysilane (Evonik). After mixing for 30 minutes, a mixture of 6.8 parts of n-propanol (99.5% purity, Sigma-Aldrich Corporation), 2.1 parts of deionized water, and 2.5 parts of an aqueous solution of HNO₃ (4.68 percent by weight nitric acid in water) was added to the first mixture to hydrolyze silanes. After 30 minutes hydrolysis, 0.25 parts of aluminum acetylacetonate (99% purity, Sigma-Aldrich Corporation) and 0.3 parts of BYK-306 (BYK USA Inc.) was added to the mixture. Finally, an amount of 71.28 parts of n-propanol is added to dilute the solution while mixing.

### Example 12

In a clean container, 13.33 parts of the solution in Example 11 is mixed with 86.67 parts of n-propanol for 30 min.

### Example 13

In a clean container, 40 parts of the solution in Example 11 is mixed with 60 parts of n-propanol for 30 min.

### Example 14

In a clean container, 11.5 parts of tetraethyl orthosilicate (98% purity, Sigma-Aldrich Corporation) is mixed with 0.75 parts of a silane functional acrylic polymer¹, 1.72 parts of colloidal silica MT-ST (Nissan Chemical), and 2.8 parts of methyltrimethoxysilane (Evonik). After mixing for 30 minutes, a mixture of 6.8 parts of 2-propanol (99.5% purity, Sigma-Aldrich Corporation), 2.1 parts of deionized water, and 2.5 parts of an aqueous solution of HNO₃ (4.68 percent by weight nitric acid in water) was added to the first mixture to hydrolyze silanes. After 30 minutes hydrolysis, 0.25 parts of aluminum acetylacetonate (99% purity, Sigma-Aldrich Corporation) and 0.3 parts of BYK-306 (BYK USA Inc.) was added to the mixture. Finally, an amount of 71.28 parts of 2-propanol is added to dilute the solution while mixing.

### Example 15

In a clean container, 13.33 parts of the solution in Example 14 is mixed with 86.67 parts of n-propanol for 30 min.
¹Prepared in accordance with Example 1 of United States Patent Number 8,507,631, with the following differences: t-amyl peroxy-2-ethylhexanoate was used as an initiator instead of azobisisobutyronitrile, and the solution was placed in an oven at 120°C (248°F) instead of 82°C (180°F) overnight.

The solutions of Examples 1 to 10 were then spin coated at different RPMs using a Cee 200X spin-coater (available from Brewer Science, Inc.) on to soda-lime glass or gorilla glass substrates pre-treated with plasma treatment using an ATTO plasma treater (available from Diener Electronics, Germany). After drying in ambient conditions for 5 minutes, an anti-fouling coating available from PPG as EC1103 was applied using a Prism Ultra-Coat ultrasonic spray coater available from Ultrasonic Systems, Inc. After drying in ambient conditions for an additional 5 minutes, the coated samples were cured at 150 °C in an oven for 60 minutes.

Example 12 was spray coated by a Prism Ultra-Coat ultrasonic spray coater from Ultrasonic Systems, Inc. on to soda-lime glass or gorilla glass substrates pre-treated with plasma treatment using an ATTO plasma treater (Diener Electronics, Germany). After drying in ambient condition for 5 minutes, an anti-fouling coating available from PPG as EC1103 was applied using a Prism Ultra-Coat ultrasonic spray coater. After the second drying in ambient condition for an additional 5 minutes, the coated samples were cured at 150 °C in an oven for 60 minutes. The single side integrated specular-only reflectance of coated samples was measured using a Perkin Elmer Lambda 1050 spectrophotometer with PMT/InGaAs 150mm integrating sphere. A black 3M electrical tape was applied to the back surface of the glass substrate at the measurement location. The tape was then rubbed completely with the back end of a marker or pen to remove all air and provide complete contact between the glass surface and the adhesive of the tape. Reflectance measurements were made with a specular mirror as the reference material. The 0% line was collected with a custom light trap at the reflectance port. Total (specular Included) reflectance measurements were made with the Spectral on plug installed in the specular spot of the sphere, and diffuse (specular excluded) reflectance measurements were made with the Spectral on plug removed from the specular spot of the sphere. Specular only reflectance was determined by subtracting the specular excluded spectra from the specular included spectra.

The compositions of Example 12 and Example 14 were spin coated using a Cee 200X spin-coater (Brewer Science, Inc.) on to PMMA substrates pre-treated with plasma treatment using an ATTO plasma treater (Diener Electronics, Germany) on both sides. After drying in ambient condition for 5 minutes, an anti-fouling coating available from PPG as EC1103 was applied to one side using a Prism Ultra-Coat ultrasonic spray coater from Ultrasonic Systems, Inc. After drying in ambient condition for an additional 5 minutes, the coated samples were cured at 85 °C in an oven for 5 hours.

The two-side reflectance and transmittance of the coated samples were measured using a Color i7 Benchtop Spectrophotometer, available from X-Rite, Inc.

Both side transmittance and reflectance as measured by a Color i7 Benchtop Spectrophotometer, available from X-Rite, Inc., is reported below.

| | Substrate | Appearance | Formula | Integrated transmittance (%) | Integrated reflectance from both sides (%) | Pencil hardness | Adhesion |
|---|---|---|---|---|---|---|---|
| Sample A | glass | good | Example 1 + EC | 92.24 | 7.65 | 8H | 5B |
| Sample B | glass | good | Example 2 + EC | 92.37 | 7.51 | 7H | 5B |
| Sample C | glass | good | Example 3 + EC | 92.21 | 7.61 | 7H | 5B |
| Sample D | glass | good | Example 4 + EC | 92.2 | 7.66 | 7H | 5B |
| Sample E | glass | good | Example 5 + EC | 92.44 | 7.46 | 6-7H | 5B |
| Sample F | PMMA | good | Example 1 + EC | 92.96 | 6.94 | H | 5B |
| Sample G | PMMA | good | Example 2 + EC | 93.06 | 6.84 | HB | 5B |
| Sample H | PMMA | good | Example 3 + EC | 92.93 | 6.96 | HB | 5B |
| Sample I | PMMA | good | Example 4 + EC | 93.05 | 6.77 | <2B | 5B |
| Sample J | PMMA | good | Example 5 + EC | 93.15 | 6.5 | 2B | 5B |
| Uncoated glass | | | | 91.9 | 8.05 | 9H | |
| Uncoated PMMA | | | | 92.48 | 7.59 | <6B | |

Both side transmittance and reflectance as measured by a Color i7 Benchtop Spectrophotometer is reported below.

| | Spin speed (rpm) | Appearance | Formula | Pencil hardness | Adhesion | T% | R% |
|---|---|---|---|---|---|---|---|
| Sample K | 2000 | good | Example 6 + EC | 9H | 5B | 92.80 | 6.99 |
| Sample L | 2000 | good | Example 6 + EC | 9H | 5B | 92.67 | 7.09 |
| Sample M | 1100 | good | Example 6 + EC | 8H | 5B | 92.69 | 7.07 |
| Sample O | 800 | good | Example 6 + EC | 9H | 5B | 92.14 | 7.61 |
| Sample P | 2000 | good | Example 7 + EC | 9H | 5B | 92.14 | 7.63 |
| Sample Q | 2000 | good | Example 7 + EC | 9H | 5B | 92.14 | 7.65 |
| Sample R | 1100 | good | Example 7 + EC | 8H | 5B | 93.04 | 6.77 |
| Sample S | 2000 | good | Example 8 + EC | 9H | 5B | 91.94 | 7.87 |
| Sample T | 2000 | good | Example 8 + EC | 9H | 5B | 91.90 | 7.89 |
| Sample U | 1100 | good | Example 8 + EC | 8H | 5B | 92.83 | 6.95 |
| Sample V | 2000 | good | Example 9 + EC | 8H | 5B | 92.44 | 7.41 |
| Sample W | 2000 | good | Example 9 + EC | 8H | 5B | 92.52 | 7.38 |
| Sample X | 1100 | good | Example 9 + EC | 8H | 5B | 92.10 | 7.66 |
| Sample Y | 800 | good | Example 9 + EC | 8H | 5B | 92.35 | 7.43 |
| Sample Z | 2000 | good | Example 10 + EC | 8H | 5B | 92.44 | 7.35 |
| Sample AA | 2000 | good | Example 10 + EC | 8H | 5B | 92.56 | 7.20 |
| Sample BB | 1100 | good | Example 10 + EC | 9H | 5B | 91.86 | 7.89 |
| Sample CC | 800 | good | Example 10 + EC | 8H | 5B | 92.21 | 7.53 |
| Uncoated glass | | | | 9H | N/A | 91.90 | 8.05 |

Single side integrated specular-only reflectance, L*, a*, and b* as measured by a Perkin Elmer Lambda 1050 spectrophotometer are reported below. The table below reports data for the same sample specimen tested in three different locations on the coated substrate.

| Glass | Single side integrated specular-only reflectance (%) | L* | a* | b* |
|---|---|---|---|---|
| Uncoated glass | 4.33 | 24.75 | -0.02 | -0.47 |
| Example 12+EC | 2.26 | 16.80 | 1.11 | -0.86 |
| Example 12+EC | 2.29 | 16.95 | 1.06 | -1.20 |
| Example 12+EC | 2.30 | 17.03 | 1.02 | -1.87 |

The composition of Example 12 was applied by spin coating to a glass substrate using a CeeX spin coater from Brewer Science, Inc. in Rolla, Missouri. Different thicknesses were achieved by using various spin speeds. After curing at 150°C for 1 hour, film thickness and refractive index (n) was simulated using an F20-UV Thin Film Analyzer from Filmetrics, Inc. San Diego, California. The high "goodness of fit" of more than 0.995 indicated the accuracy of the refractive index measurement.

| Example | wavelength (nm) | n | Film thickness (nm) | Goodness of fit |
|---|---|---|---|---|
| 12-A | 633 | 1.441 | 78.67 | 0.9990 |
| 12-B | 550 | 1.450 | 82.87 | 0.9990 |
| 12-C | 450 | 1.448 | 77.30 | 0.9990 |
| 12-D | 650 | 1.441 | 76.96 | 0.9990 |
| 12-E | 650 | 1.444 | 74.27 | 0.9988 |
| 12-F | 550 | 1.437 | 69.32 | 0.9988 |
| 12-G | 650 | 1.439 | 67.20 | 0.9990 |
| 12-H | 550 | 1.436 | 61.62 | 0.9985 |
| 12-1 | 550 | 1.437 | 112.07 | 0.9990 |
| 12-J | 550 | 1.429 | 135.55 | 0.9985 |
| 12-K | 550 | 1.430 | 106.26 | 0.9990 |
| 12-M | 550 | 1.441 | 77.68 | 0.9990 |
| 12-N | 550 | 1.445 | 68.32 | 0.9990 |
| 12-O | 550 | 1.444 | 58.05 | 0.9990 |

Haze differences, L* a* and b* of samples formulated with n-propanol and iso-propanol are reported below.

| | Substrate | Solvent | Pencil hardness | Adhesion | T% | Haze | L* | a* | b* |
|---|---|---|---|---|---|---|---|---|---|
| Example 12+EC | PMMA | n-propanol | 6H | 5B | 94.96 | 0.17 | 98 | -0.06 | 0.49 |
| Example 15+EC | PMMA | iso-propanol | 6H | 5B | 94.25 | 10.77 | 97.73 | 0.01 | -0.88 |
| | Uncoated PMMA | | <6B | | 92.49 | 1.44 | 97.02 | 0 | 0.06 |

Note that the haze of samples formulated with n-propanol is significantly lower than those formulated with iso-propanol over PMMA substrates.

A polycarbonate lens was dip-coated with the anti-reflective coating solution of Example 13 at a 400 mm/min withdrawal speed using a dip-coater model QPI-168 from Qualtech Products Industry, Denver, Colorado. The coated polycarbonate lens was then cured at 100 °C for 3 hours. Transmittance of the coated polycarbonate lens was measured by Perkin Elmer Lambda 1050 spectrophotometer, in comparison with an uncoated polycarbonate lens. Results are shown in the table below and in Figure 1.

| Substrate | Formula | T (%) | L* | a* | b* | Haze (%) |
|---|---|---|---|---|---|---|
| Polycarbonate | Example 13+EC | 95.40 | 98.20 | -0.39 | 0.16 | 0.1 |
| Uncoated polycarbonate | | 89.26 | 95.69 | -0.09 | 0.35 | 0.1 |

Whereas particular embodiments of this invention have been described above for purposes of illustration, it will be evident to those skilled in the art that numerous variations of the details of the present invention may be made without departing from the scope of the invention as defined in the appended claims.

## Claims

1. A coated article demonstrating anti-reflective properties comprising:
(A) a substrate; and
(B) an anti-reflective coating layer applied to at least a portion of at least one surface of the substrate; wherein the anti-reflective coating layer is formed from an acidic sol-gel composition comprising:
(a) tetraalkoxysilane;
(b) alkyl trialkoxysilane;
(c) a silane-functional acrylic polymer;
(d) inorganic oxide particles;
(e) a mineral acid;
(f) water; and
(g) a solvent.

2. The coated article of claim 1, wherein the acidic sol-gel composition further comprises MgF₂ present in the acidic sol-gel composition in the amount of 0.1 to 15 percent by weight, based on the total weight of the sol-gel composition.

3. The coated article of any of the preceding claims, wherein the substrate (A) comprises glass, polymethylmethacrylate, polycarbonate, polyurea-urethane, polyethylene terephthalate, or allyl diglycol carbonate.

4. The coated article of claim 3 wherein the substrate has two opposing surfaces and the anti-reflective coating layer (B) is applied to at least a portion of both opposing surfaces of the substrate to form two coated sides.

5. The coated article of any of claims 1 or 3 further comprising an anti-fouling coating layer applied to at least a portion of the anti-reflective coating layer; or
of claim 4, further comprising an anti-fouling coating layer applied on top of at least a portion of both coated sides.

6. The coated article of claim 4 wherein the substrate comprises polymethylmethacrylate and the solvent (g) comprises n-propanol, present in an amount higher than 60 percent by weight, based on the total weight of the acidic sol-gel composition: or of claim 3, wherein the substrate has two opposing surfaces and the substrate comprises glass and the anti-reflective coating layer is applied to one surface of the substrate, and wherein the coated article demonstrates a single-side integrated specular-only reflectance less than 2.80% in a wavelength range from 380 nm to 780 nm, measured according to the method mentioned in the description.

7. The coated article of any of the preceding claims, wherein said coated article is an optical article.

8. The coated article of any of the preceding claims, wherein the anti-reflective coating layer has a dry film thickness of less than 200 nm.

9. A method of forming a coated article having an anti-reflective surface comprising:
(1) applying the anti-reflective coating layer (B) as defined in any of claims 1 or 2 to at least a portion of a surface of a substrate to form a coated substrate; and
(2) subjecting the coated substrate to conditions for a time sufficient to effect cure of the anti-reflective coating.

10. The method of claim 9, wherein the anti-reflective coating layer is applied by spin-coating, dip-coating, spray-coating, slot-die coating, curtain coating, or flow coating and/or the coated substrate is cured at a temperature of at least 80°C for at least 30 minutes.

11. The method of any of claims 9 or 10, wherein the substrate comprises glass, polymethylmethacrylate, or polycarbonate, and wherein the anti-reflective coating layer is applied by spin coating or spray coating and has a dry film thickness of 80 to 120 nm.

12. The method of claim 11, wherein the coated article comprises an optical article selected from a display screen, a touch screen, a solar cell, and a glazing.

13. The method of any of claims 9 or 10, wherein the substrate comprises polycarbonate or allyl diglycol carbonate, and wherein the anti-reflective coating layer is applied by dip-coating and has a dry film thickness of 80 to 120 nm.

14. The method of claim 13, wherein the coated article comprises an optical lens.

15. The method of any of claims 9 to14, further comprising applying an anti-fouling coating layer to at least a portion of the anti-reflective coating layer, either before or after step (2).

## Patentansprüche

1. Ein beschichteter Artikel, welcher Antireflexionseigenschaften aufweist, enthaltend:
(A) ein Substrat, und
(B) eine Antireflexionsbeschichtungsschicht, welche auf zumindest einen Teil von zumindest einer Oberfläche des Substrats aufgetragen ist, wobei die Antireflexionsbeschichtungsschicht aus einer sauren Sol-Gel-Zusammensetzung gebildet ist, wobei die saure Sol-Gel-Zusammensetzung:
(a) Tetraalkoxysilan,
(b) Alkyltrialkoxysilan,
(c) ein silanfunktionalisiertes Acrylpolmer,
(d) anorganische Oxidpartikel,
(e) eine Mineralsäure,
(f) Wasser, und
(g) ein Lösemittel
enthält.

2. Der beschichtete Artikel gemäß Anspruch 1, wobei die saure Sol-Gel-Zusammensetzung ferner MgF₂ enthält, das in der sauren Sol-Gel-Zusammensetzung in der Menge von 0,1 bis 15 Gew.-%, basierend auf dem Gesamtgewicht der Sol-Gel-Zusammensetzung, vorhanden ist.

3. Der beschichtete Artikel gemäß einem der vorherigen Ansprüche, wobei das Substrat (A) Glas, Polymethylmethacrylat, Polycarbonat, Polyureaurethan, Polyethylenterephthalat oder Allyldiglykolcarbonat enthält.

4. Der beschichtete Artikel gemäß Anspruch 3, wobei das Substrat zwei gegenüberliegende Oberflächen aufweist und die Antireflexionsbeschichtungsschicht (B) auf zumindest einen Teil der beiden gegenüberliegenden Oberflächen des Substrats aufgebracht ist, um zwei beschichtete Seiten zu erhalten.

5. Der beschichtete Artikel gemäß einem der Ansprüche 1 oder 3, wobei der Artikel ferner eine verschmutzungsabweisende Beschichtungsschicht enthält, die auf zumindest einen Teil der Antireflexionsbeschichtungsschicht aufgetragen ist, oder
der beschichtete Artikel gemäß Anspruch 4, wobei der Artikel ferner eine verschmutzungsabweisende Beschichtungsschicht enthält, die auf zumindest einen Teil der beiden beschichteten Seiten aufgetragen ist.

6. Der beschichtete Artikel gemäß Anspruch 4, wobei das Substrat Polymethylmethacrylat enthält und das Lösemittel (g) n-Propanol in einer Menge größer als 60 Gew.-% enthält, basierend auf dem Gesamtgewicht der sauren Sol-Gel-Zusammensetzung, oder der beschichtete Artikel gemäß Anspruch 3, wobei das Substrat zwei gegenüberliegende Oberflächen aufweist und das Substrat Glas enthält und die Antireflexionsbeschichtungsschicht auf eine Oberfläche des Substrats aufgetragen ist und wobei der beschichtete Artikel eine einseitig integrierte nur spiegelnde Reflexion von weniger als 2,80 % in einem Wellenlängenbereich von 380 nm bis 780 nm aufweist, gemessen gemäß des in der Beschreibung angegebenen Verfahrens.

7. Der beschichtete Artikel gemäß einem der vorherigen Ansprüche, wobei der beschichtete Artikel ein optischer Artikel ist.

8. Der beschichtete Artikel gemäß einem der vorherigen Ansprüche, wobei die Antireflexionsbeschichtungsschicht eine trockene Filmdicke von weniger als 200 nm aufweist.

9. Ein Verfahren zur Herstellung eines beschichteten Artikels, der eine Antireflexionsoberfläche aufweist, umfassend:
(1) Auftragen der Antireflexionsbeschichtungsschicht (B), wie in einem der Ansprüche 1 oder 2 definiert ist, auf zumindest einem Teil einer Oberfläche eines Substrats, um eine beschichtete Oberfläche zu erhalten, und
(2) Aussetzen des beschichteten Substrats Bedingungen für einen ausreichenden Zeitraum, um die Antireflexionsbeschichtung zu härten.

10. Das Verfahren gemäß Anspruch 9, wobei die Antireflexionsbeschichtungsschicht mittels Rotationsbeschichten, Tauchbeschichten, Sprühbeschichten, Schlitzdüsenbeschichten, Vorhangbeschichten oder Verlaufbeschichten aufgetragen wird und/oder das beschichtete Substrat bei einer Temperatur von mindestens 80 °C für mindestens 30 Minuten gehärtet wird.

11. Das Verfahren gemäß einem der Ansprüche 9 oder 10, wobei das Substrat Glas, Polymethylmethacrylat oder Polycarbonat enthält und wobei die Antireflexionsbeschichtungsschicht mittels Rotationsbeschichten oder Sprühbeschichten aufgetragen wird und eine trockene Filmdicke von 80 bis 120 nm aufweist.

12. Das Verfahren gemäß Anspruch 11, wobei der beschichtete Artikel einen optischen Artikel umfasst, der aus einem Anzeigebildschirm, einem Berührungsbildschirm, einer Solarzelle und einer Verglasung ausgewählt ist.

13. Das Verfahren gemäß einem der Ansprüche 9 oder 10, wobei das Substrat Polycarbonat oder Allyldiglykolcarbonat enthält, und wobei die Antireflexionsbeschichtungsschicht mittels Tauchbeschichten aufgetragen wird und eine trockene Filmdicke von 80 bis 120 nm aufweist.

14. Das Verfahren gemäß Anspruch 13, wobei der beschichtete Artikel eine optische Linse umfasst.

15. Das Verfahren gemäß einem der Ansprüche 9 bis 14, wobei das Verfahren ferner das Aufbringen einer verschmutzungsabweisende Beschichtungsschicht auf zumindest einen Teil der Antifouling-Beschichtungsschicht umfasst, entweder vor oder nach Schritt (2).

## Revendications

1. Article revêtu, manifestant des propriétés anti-reflets, comportant :
A) un substrat,
B) et une couche de revêtement anti-reflets, appliquée sur au moins une partie d'au moins une surface du substrat,
dans lequel la couche de revêtement anti-reflets est formée à partir d'une composition sol-gel acide comprenant :
a) un tétraalcoxy-silane,
b) un alkyl-trialcoxy-silane,
c) un polymère polyacrylique à fonctions silane,
d) un oxyde inorganique en particules,
e) un acide minéral,
f) de l'eau,
g) et un solvant.

2. Article revêtu conforme à la revendication 1, dans lequel la composition sol-gel acide comprend en outre du fluorure de magnésium MgF₂, qui se trouve présent dans la composition sol-gel acide en une proportion de 0,1 à 15 %, en poids rapporté au poids total de la composition sol-gel.

3. Article revêtu conforme à l'une des revendications précédentes, dans lequel le substrat (A) comprend un verre, un poly(méthacrylate de méthyle), un polycarbonate, un polyurée-uréthane, un poly(éthylène téréphtalate), ou un poly(allyl-diglycol-carbonate).

4. Article revêtu conforme à la revendication 3, dans lequel le substrat présente deux surfaces opposées, et la couche de revêtement anti-reflets (B) est appliquée sur au moins une partie de chacune des deux surfaces opposées du substrat, pour y former deux faces revêtues.

5. Article revêtu conforme à l'une des revendications 1 et 3, qui comporte en outre une couche de revêtement anti-salissures, appliquée sur au moins une partie de la couche de revêtement anti-reflets ; ou conforme à la revendication 4, qui comporte en outre une couche de revêtement anti-salissures, appliquée par-dessus au moins une partie de chacune des deux faces revêtues.

6. Article revêtu conforme à la revendication 4, dans lequel le substrat comprend un poly(méthacrylate de méthyle) et le solvant (g) comprend du n-propanol, présent en une proportion de plus de 60 %, en poids rapporté au poids total de la composition sol-gel acide ; ou conforme à la revendication 3, dans lequel le substrat présente deux surfaces opposées et comprend un verre, et la couche de revêtement anti-reflets est appliquée sur une seule surface du substrat, et lequel article revêtu présente une réflectance seulement spéculaire intégrée sur une seule face, mesurée suivant le procédé indiqué dans la description, inférieure à 2,80 % dans l'intervalle de longueurs d'onde allant de 380 nm à 780 nm.

7. Article revêtu conforme à l'une des revendications précédentes, lequel article revêtu est un article d'optique.

8. Article revêtu conforme à l'une des revendications précédentes, dans lequel la couche de revêtement anti-reflets, à l'état de film sec, présente une épaisseur de moins de 200 nm.

9. Procédé de formation d'un article revêtu doté d'une surface anti-reflets, comportant les étapes suivantes :
1) appliquer une couche de revêtement anti-reflets (B), définie dans la revendication 1 ou 2, sur au moins une partie d'une surface d'un substrat, pour former un substrat revêtu,
2) et soumettre ce substrat revêtu, pendant suffisamment longtemps, à des conditions ayant pour effet de faire durcir le revêtement anti-reflets.

10. Procédé conforme à la revendication 9, dans lequel la couche de revêtement anti-reflets est appliquée par enduction par centrifugation, enduction par immersion, enduction par pulvérisation, enduction à la fente, enduction en rideau ou enduction par aspersion, et/ou l'on fait durcir le substrat revêtu à une température d'au moins 80 °C pendant au moins 30 minutes.

11. Procédé conforme à la revendication 9 ou 10, dans lequel le substrat comprend un verre, un poly(méthacrylate de méthyle) ou un polycarbonate, et la couche de revêtement anti-reflets est appliquée par enduction par centrifugation ou par enduction par pulvérisation et présente, à l'état de film sec, une épaisseur de 80 à 120 nm.

12. Procédé conforme à la revendication 11, dans lequel l'article revêtu comprend un article d'optique choisi parmi un écran d'affichage, un écran tactile, une pile solaire et un vitrage.

13. Procédé conforme à la revendication 9 ou 10, dans lequel le substrat comprend un polycarbonate ou un poly(allyl-diglycol-carbonate), et la couche de revêtement anti-reflets est appliquée par enduction par immersion et présente, à l'état de film sec, une épaisseur de 80 à 120 nm.

14. Procédé conforme à la revendication 13, dans lequel l'article revêtu comprend une lentille optique.

15. Procédé conforme à l'une des revendications 9 à 14, qui comporte en outre le fait d'appliquer, avant ou après l'étape (2), une couche de revêtement anti-salissures sur au moins une partie de la couche de revêtement anti-reflets.
